# EUROPEAN PATENT SPECIFICATION

(11) **EP 2 952 377 B1**
(45) Date of publication and mention of the grant of the patent: **04.10.2017**
(21) Application number: 14170948.5
(22) Date of filing: 03.06.2014
(51) Int. Cl.: B60L 1/00, H01G 2/08

(54) **A capacitor module for a mobile working machine**
Kondensatormodul für eine mobile Arbeitsmaschine
Module de condensateur pour machine de travail mobile

(43) Date of publication of application: 09.12.2015
(73) Proprietor: Visedo Oy, 53850 Lappeenranta (FI)
(72) Inventor: Järveläinen, Tero, 53850 Lappeenranta (FI)
(74) Representative: Finnpatent Oy

(56) References cited:
- EP-A1- 2 682 963
- WO-A1-99/54893
- DE-A1-102004 043 465
- DE-A1-102005 038 409
- JP-A- 2002 083 739
- US-A- 5 214 564
- US-A1- 2007 053 156
- US-A1- 2011 090 614

## Description

### Field of the invention

The invention relates to a capacitor module suitable for being a basic construction unit of a capacitive energy-storage. Furthermore, the invention relates to a mobile working machine comprising an electromechanical power transmission chain.

### Background

An electromechanical power transmission chain comprises typically one or more electrical machines and an electronic power converter. The electromechanical power transmission chain can be a series transmission chain where one of the electrical machines operates as generator and the electronic power converter is arranged to convert the electrical voltages produced by the generator into electrical voltages having amplitudes and frequencies suitable for the one or more other electrical machines. The generator can be driven with a combustion engine that can be e.g. a diesel engine, an Otto-cycle engine, or a turbine engine. The other electrical machines can be, for example, electrical motors in wheels of a mobile working machine. The electronic power converter comprises typically an intermediate circuit, a converter stage between the generator and the intermediate circuit and one or more other converter stages between the intermediate circuit and the other electrical machines. It is also possible that the electromechanical power transmission chain is a parallel transmission chain where the generator is occasionally used as a motor that assists the combustion engine, especially when high output power is needed. In this case, the electronic power converter comprises typically an intermediate circuit, a converter stage between the generator and the intermediate circuit, and one or more converter stages between the intermediate circuit and one or more energy-storages.

The above-mentioned intermediate circuit is typically a capacitive energy-storage that comprises one or more capacitor modules and one or more heat-sink elements for cooling the one or more capacitor modules. A heat-sink element typically comprises cooling fins on its outer surface and/or cooling channels for conducting cooling fluid, e.g. water. Each capacitor module comprises an electrode structure for storing electrical energy in the form of electric charge polarization between the electrodes of the electrode structure. The electrode structure is inside a casing which can be made of for example aluminum. In many cases, the casing is fitted to an aperture of a heat-sink element.

A cooling arrangement of the kind described above is, however, not free from challenges. One of the challenges is related to a need to arrange a sufficiently good thermal contact between the casing and the heat-sink element.

Publication DE102005038409 describes a capacitor module that comprises an aluminum casing having a profiled form shaped by an extruder. The profiled form includes means of fastening such as grooves, holes, channels, ribs, and/or hooks. The profiled form may further comprise cooling channels for conducting cooling fluid.

Publication US2011090614 describes a capacitor module that comprises a housing element for receiving one or more capacitor units. One of the challenges is related to the need for sufficiently good thermal contacts between the housing element and the one or more capacitor units.

Publication EP2682963 describes a capacitor module for a mobile working machine. The capacitive module is encapsulated and comprises cooling ducts and wiring and piping lead-throughs. Thus, modular capacitive energy-storages of different sizes can be built by interconnecting capacitor modules described in EP2682963, and there is no need to build separately an encapsulation provided with cooling ducts.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the invention, there is provided a new capacitor module according to claim 1 that is suitable for being a basic construction unit of a capacitive energy-storage. A capacitor module according to the invention comprises:
- electrode structures each being suitable for storing electrical energy in the form of electric charge polarization between electrodes of the electrode structure under consideration, and
- a casing made of electrically conductive material and containing the electrode structures.

The casing is a heat-sink element that comprises cooling structures and cavities containing the electrode structures so that each cavity contains one of the electrode structures. The capacitor module further comprises an electrically conductive lid closing the cavities. The cooling structures may comprise e.g. cooling fins and/or cooling channels for conducting liquid or gaseous cooling fluid. Thus, there is no need for a separate heat-sink element because the casing is not only a casing but also a heat-sink element. Furthermore, the casing is a single piece of the electrically conductive material. Therefore, there are no mutually interfacing material surfaces in the thermally conductive path from the walls of the cavity, i.e. from the inner surfaces of the casing, to the cooling structures. One of the electrodes of at least one of the electrode structures is electrically connected to the casing, and the electrically conductive lid is electrically insulated from the casing and electrically connected to another of the electrodes of the at least one of the electrode structures.

In accordance with the invention, there is provided also a new mobile working machine according to claim 7. A mobile working machine according to the invention comprises:
- a combustion engine, and
- an electromechanical power transmission chain between the combustion engine and one or more wheels, chain tracks, and/or other actuators of the mobile working machine.

The electromechanical transmission chain comprises a capacitive energy-storage comprising one or more capacitor modules according to the invention.

The mobile working machine comprises preferably, but not necessarily, a liquid cooling system configured to cool both a hydraulic system of the mobile working machine and the electromechanical power transmission chain. The mobile working machine can be, for example, a tractor, a bucket charger, a road drag, a bulldozer, or any other working machine having wheels and/or chain tracks or any other means for moving.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### Brief description of the figures

Exemplifying and non-limiting embodiments of the invention and their advantages are explained in greater detail below in the sense of examples and with reference to the accompanying drawings, in which:
figures 1 a and 1b illustrate a capacitor module,
figures 2a and 2b illustrate a capacitor module according to an exemplifying and non-limiting embodiment of the invention, and
figure 3 shows a schematic illustration of a mobile working machine according to an exemplifying and non-limiting embodiment of the invention.

### Description of the exemplifying embodiments

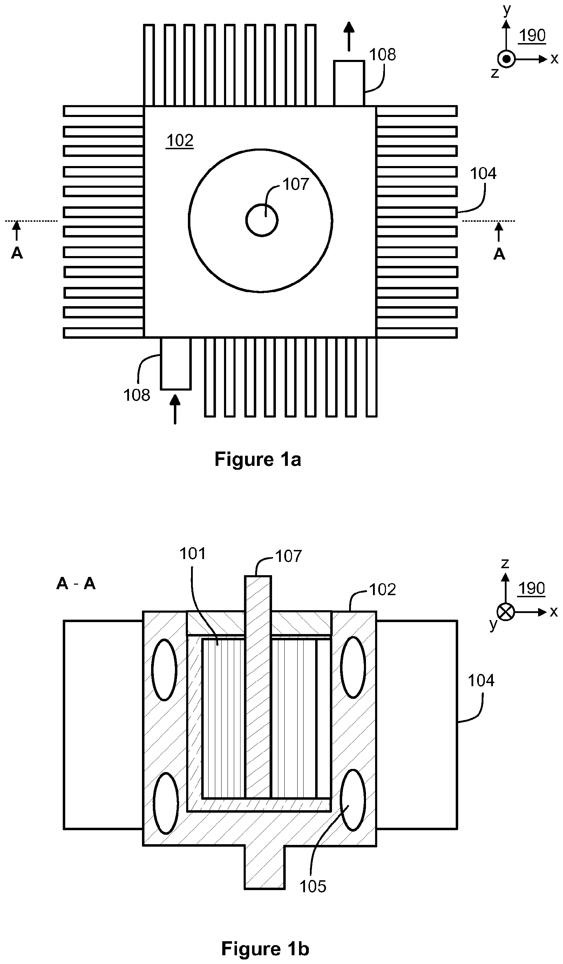

Figure 1 a shows a capacitor module. Figure 1b shows a view of a section taken along a line A-A shown in figure 1 a. The section plane is parallel with the xz-plane of a coordinate system 190. The capacitor module comprises an electrode structure 101 for storing electrical energy in the form of electric charge polarization between electrodes of the electrode structure. The electrode structure 101 may comprise e.g. a first foil, a second foil, and dry dielectric material between the first and second foils. It is also possible that the electrode structure 101 comprises an anode foil, a cathode foil, and porous filler material between the anode and cathode foils so that the filler material is impregnated with liquid electrolyte. In this case, the capacitor module is an electrolytic capacitor. Furthermore, it is also possible that the electrode structure 101 constitutes an electric double-layer capacitor "EDLC" which is often called a "super capacitor". The capacitor module comprises a casing 102 made of electrically conductive material, e.g. aluminum. The casing 102 is a heat-sink element comprising cooling structures and a cavity that contains the electrode structure 101 as illustrated in figure 1b. Therefore, the casing 102 acts not only as a casing but also as a heat-sink element for cooling the electrode structure 101. Furthermore, the casing 102 is a single piece of the electrically conductive material. Thus, the thermally conductive path from the walls of the cavity to the cooling structures is free from mutually interfacing material surfaces. The heat transfer is effective because there are no mutually interfacing material surfaces on the above-mentioned thermally conductive path. The cooling structures of the casing 102 may comprise for example cooling fins on an outer surface of the casing and/or cooling channels for conducting liquid or gaseous cooling fluid. Liquid cooling fluid can be e.g. water, and gaseous cooling fluid can be e.g. air. In figures 1a and 1b, one of the cooling fins is denoted with a reference number 104. In figure 1b, one of the cooling channels is denoted with a reference number 105. Connection tubes 108 of the cooling channels are schematically depicted in figure 1 a.

In the exemplifying capacitor module illustrated in figures 1a and 1b, one of the electrodes of the electrode structure 101 is electrically connected to the casing 102 and the other of the electrodes is electrically connected to a terminal element 107 which is electrically insulated from the casing 102. Therefore, in this case, the casing 102 acts also as an electrical pole of the capacitor module. It is, however, also possible that each of the electrodes of the electrode structure 101 is electrically connected to a respective one of terminal elements which are electrically insulated from each other and from the casing.

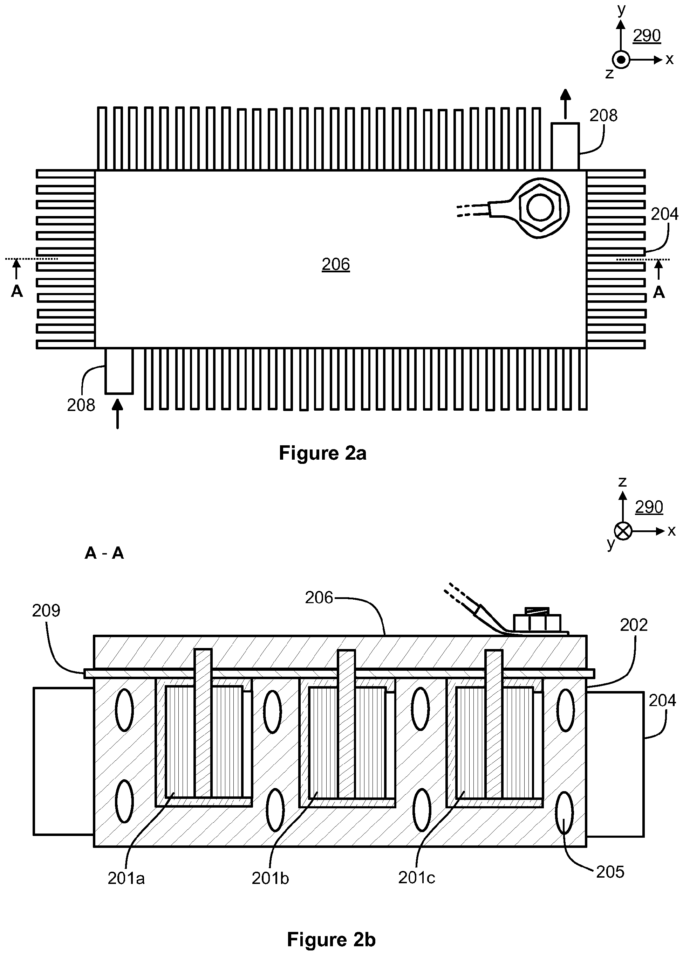

Figure 2a shows a capacitor module according to an exemplifying and non-limiting embodiment of the invention. Figure 2b shows a view of a section taken along a line A-A shown in figure 2a. The section plane is parallel with the xz-plane of a coordinate system 290. The capacitor module comprises electrode structures 201a, 201b, and 201c for storing electrical energy. Each of the electrode structures 201a, 201b, and 201c may comprise e.g. a first foil, a second foil, and dry dielectric material between the first and second foils. It is also possible that each of the electrode structures 201a, 201b, and 201c comprises an anode foil, a cathode foil, and porous filler material between the anode and cathode foils so that the filler material is impregnated with liquid electrolyte. In this case, the capacitor module is an electrolytic capacitor. Furthermore, it is also possible that each of the electrode structures constitutes an electric double-layer capacitor "EDLC". The capacitor module comprises a casing 202 that is a single piece of electrically conductive material, e.g. aluminum. The 202 casing is a heat-sink element that comprises cooling structures and cavities that contain the electrode structures 201a, 201b, and 201c as illustrated in figure 2b. The cooling structures of the casing 202 may comprise for example cooling fins on an outer surface of the casing and/or cooling channels for conducting liquid or gaseous cooling fluid. In figures 2a and 2b, one of the cooling fins is denoted with a reference number 204. In figure 2b, one of the cooling channels is denoted with a reference number 205. Connection tubes 208 of the cooling channels are schematically depicted in figure 2a. Therefore, the casing 202 acts not only as a casing but also as a heat-sink element for cooling the electrode structures 201a, 201b, and 201c.

In the exemplifying capacitor module illustrated in figures 2a and 2b, a first one of the electrodes of each of the electrode structures 201a, 201b, and 201c is electrically connected to the casing 202. The capacitor module further comprises an electrically conductive lid 206 arranged to close the cavities as illustrated in figure 2b. The lid 206 is electrically insulated from the casing 202 with the aid of a layer of electrically insulating material 209. A second one of the electrodes of each of the electrode structures 201a, 201b, and 201c is electrically connected to the electrically conductive lid 206. Therefore, the casing 202 constitutes one electrical pole of the capacitor module and the lid 206 constitutes the other electrical pole of the capacitor module.

The casing 202 can be manufactured as a single piece of electrically conductive material e.g. by casting or extrusion and/or machining.

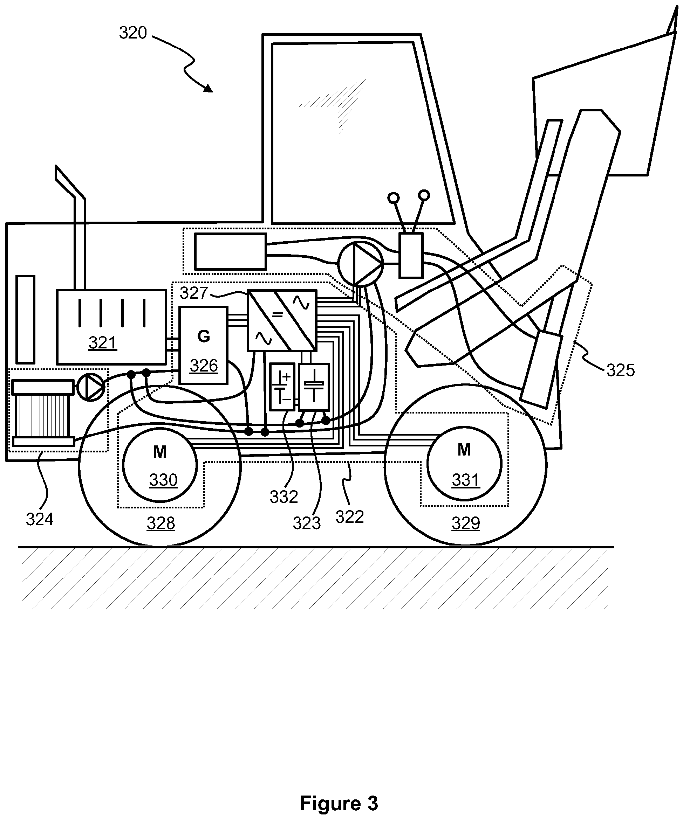

Figure 3 shows a schematic illustration of a mobile working machine 320 according to an exemplifying and non-limiting embodiment of the invention. In this exemplifying case, the mobile working machine is a bucket charger but the mobile working machine could as well be a tractor, a road drag, a bulldozer, or any other working machine having wheels and/or chain tracks or any other means for moving. The mobile working machine comprises a combustion engine 321 that can be e.g. a diesel engine, an Otto-cycle engine, or a turbine engine. The mobile working machine comprises an electromechanical power transmission chain 322 between the combustion engine 321 and wheels of the mobile working machine. In figure 3, two of the wheels are denoted with reference numbers 328 and 329.The electromechanical transmission chain comprises a generator 321 the rotor of which is mechanically connected to the shaft of the combustion engine. The electromechanical transmission chain comprises an electronic power converter 327 and electrical motors at the hubs of the wheels of the mobile working machine. In figure 3, two of the electrical motors are denoted with reference numbers 330 and 331. The electronic power converter 327 is arranged to convert the electrical voltage produced by the generator 326 into electrical voltages having amplitudes and frequencies suitable for the electrical motors. The electromechanical transmission chain further comprises a capacitive energy-storage 323 comprising one or more capacitor modules. Each of the capacitor modules comprises electrode structures for storing electrical energy and a casing that is a single piece of electrically conductive material and contains the electrode structures. The casing is a heat-sink element that comprises cooling structures, e.g. cooling fins and/or cooling ducts, and cavities containing the electrode structures.

A mobile working machine according to an exemplifying and non-limiting embodiment of the invention comprises a liquid cooling system 324, and the casing of at least one capacitor module comprises cooling ducts connected to the liquid cooling system 324. The liquid cooling system 324 can be arranged to cool also the other parts of the electromechanical power transmission chain 322, and/or a hydraulic system 325 of the mobile working machine, and/or the combustion engine 321.

A mobile working machine according to an exemplifying embodiment of the invention comprises a battery element 332 which, together with the capacitive energy-storage 323, can be used for responding to peak power needs exceeding the maximum power of the combustion engine 321.

The specific examples provided in the description given above should not be construed as limiting the applicability and/or interpretation of the appended claims.

## Claims

1. A capacitor module comprising:
- electrode structures (101, 201a) for storing electrical energy in form of electric charge polarization between electrodes of the electrode structure under consideration, and
- a casing (102, 202) made of electrically conductive material and containing the electrode structures,
wherein:
- the casing is a heat-sink element comprising cooling structures (104, 105, 204, 205) and cavities containing the electrode structures, the casing being a single piece of the electrically conductive material and a thermally conductive path from walls of the cavities to the cooling structures being free from mutually interfacing material surfaces,
- one of the electrodes of each electrode structure (101, 201a, 201b, 201c) is electrically connected to the casing, and
- the capacitor module comprises an electrically conductive lid (206) electrically insulated from the casing,
**characterized in that** the lid is closing the cavities and is electrically connected to another of the electrodes of each electrode structure.

2. A capacitor module according to claim 1, wherein the cooling structures comprise cooling fins (104, 204) on an outer surface of the casing.

3. A capacitor module according to claim 1 or 2, wherein the cooling structures comprise cooling channels (105, 205) for conducting cooling fluid.

4. A capacitor module according to any of claims 1-3, wherein each electrode structure comprises a first foil, a second foil, and dry dielectric material between the first and second foils.

5. A capacitor module according to any of claims 1-3, wherein each electrode structure comprises an anode foil, a cathode foil, and porous filler material located between the anode and cathode foils and impregnated with liquid electrolyte.

6. A capacitor module according to any of claims 1-3, wherein each electrode structure constitutes an electric double-layer capacitor.

7. A mobile working machine (320) comprising:
- a combustion engine (321), and
- an electromechanical power transmission chain (322) between the combustion engine and one or more actuators of the mobile working machine,
wherein the electromechanical power transmission chain comprises a capacitive energy-storage (323) comprising at least one capacitor module according to any of claims 1-6.

8. A mobile working machine according to claim 7, wherein the capacitor module is according to claim 6 and the mobile working machine comprises a liquid cooling system (324) connected to the cooling channels of the capacitor module.

9. A mobile working machine according to claim 8, wherein the liquid cooling system is configured to cool a hydraulic system (325) of the mobile working machine.

## Patentansprüche

1. Kondensatormodul, umfassend:
- Elektrodenstrukturen (101, 201a) zum Speichern elektrischer Energie in Form von elektrischer Ladungspolarisation zwischen Elektroden der Betrachtungselektrodenstruktur und
- ein Gehäuse (102, 202), welches aus einem elektrisch leitfähigen Material hergestellt ist und die Elektrodenstrukturen enthält,
wobei:
- das Gehäuse ein Kühlkörperelement ist, welches Kühlstrukturen (104, 105, 204, 205) und Hohlräume umfasst, welche die Elektrodenstrukturen enthalten, wobei das Gehäuse ein einstückiges Teil aus dem elektrisch leitfähigen Material ist und eine thermisch leitfähige Bahn aus Wänden der Hohlräume zu den Kühlstrukturen frei von gegenseitig gekoppelten Materialflächen ist,
- eine der Elektroden jeder Elektrodenstruktur (101, 201a, 201b, 201c) elektrisch mit dem Gehäuse verbunden ist und
- das Kondensatormodul einen elektrisch leitfähigen Deckel (206) umfasst, welcher von dem Gehäuse elektrisch isoliert ist,
**dadurch gekennzeichnet, dass** der Deckel die Hohlräume verschließt und mit einer anderen der Elektroden jeder Elektrodenstruktur elektrisch verbunden ist.

2. Kondensatormodul nach Anspruch 1, wobei die Kühlstrukturen an einer äußeren Fläche des Gehäuses Kühlrippen (104, 204) umfassen.

3. Kondensatormodul nach Anspruch 1 oder 2, wobei die Kühlstrukturen Kühlkanäle (105, 205) zum Leiten von Kühlfluid umfassen.

4. Kondensatormodul nach einem der Ansprüche 1-3, wobei jede Elektrodenstruktur eine erste Folie, eine zweite Folie und ein trockenes, dielektrisches Material zwischen der ersten und der zweiten Folie umfasst.

5. Kondensatormodul nach einem der Ansprüche 1-3, wobei jede Elektrodenstruktur eine Anodenfolie, eine Kathodenfolie und ein poröses Füllmaterial umfasst, welches zwischen der Anoden- und der Kathodenfolie angeordnet ist und mit einem flüssigen Elektrolyten imprägniert ist.

6. Kondensatormodul nach einem der Ansprüche 1-3, wobei jede Elektrodenstruktur einen elektrischen Doppelschichtkondensator ausmacht.

7. Mobile Arbeitsmaschine (320), umfassend:
- einen Verbrennungsmotor (321) und
- eine elektromechanische Kraftübertragungskette (322) zwischen dem Verbrennungsmotor und einem oder mehreren Aktuatoren der mobilen Arbeitsmaschine,
wobei die elektromechanische Kraftübertragungskette einen kapazitiven Energiespeicher (323) umfasst, welcher wenigstens ein Kondensatormodul nach einem der Ansprüche 1-6 umfasst.

8. Mobile Arbeitsmaschine nach Anspruch 7, wobei das Kondensatormodul nach Anspruch 6 vorgesehen ist und die mobile Arbeitsmaschine ein Flüssigkeitskühlsystem (324) umfasst, welches mit den Kühlkanälen des Kondensatormoduls verbunden ist.

9. Mobile Arbeitsmaschine nach Anspruch 8, wobei das Flüssigkeitskühlsystem dazu eingerichtet ist, ein hydraulisches System (325) der mobilen Arbeitsmaschine zu kühlen.

## Revendications

1. Module de condensateur comprenant :
- des structures d'électrodes (101, 201a) pour stocker de l'énergie électrique sous la forme d'une polarisation de charge électrique entre des électrodes de la structure d'électrodes en considération, et
- un boîtier (102, 202) constitué d'un matériau électriquement conducteur et contenant les structures d'électrodes,
dans lequel :
- le boîtier est un élément dissipateur de chaleur comprenant des structures de refroidissement (104, 105, 204, 205) et des cavités contenant les structures d'électrodes, le boîtier étant un seul tenant du matériau électriquement conducteur et un chemin électriquement conducteur allant des parois des cavités aux structures de refroidissement étant dépourvu de surfaces de matériau faisant mutuellement interface,
- l'une des électrodes de chaque structure d'électrodes (101, 201a, 201b, 201c) est électriquement connectée au boîtier, et
- le module de condensateur comprend un couvercle électriquement conducteur (206) électriquement isolé du boîtier,
**caractérisé en ce que**
le couvercle ferme les cavités et est électriquement connecté à une autre des électrodes de chaque structure d'électrodes.

2. Module de condensateur selon la revendication 1, dans lequel les structures de refroidissement comprennent des ailettes de refroidissement (104, 204) sur une surface externe du boîtier.

3. Module de condensateur selon la revendication 1 ou 2, dans lequel les structures de refroidissement comprennent des canaux de refroidissement (105, 205) pour conduire un fluide de refroidissement.

4. Module de condensateur selon l'une quelconque des revendications 1 à 3, dans lequel chaque structure d'électrodes comprend une première feuille, une seconde feuille et un matériau diélectrique sec entre les première et seconde feuilles.

5. Module de condensateur selon l'une quelconque des revendications 1 à 3, dans lequel chaque structure d'électrodes comprend une feuille d'anode, une feuille de cathode, et un matériau de charge poreux situé entre les feuilles d'anode et de cathode et imprégné d'un électrolyte liquide.

6. Module de condensateur selon l'une quelconque des revendications 1 à 3, dans lequel chaque structure d'électrodes constitue un condensateur double couche électrique.

7. Machine de travail mobile (320) comprenant :
- un moteur à combustion (321), et
- une chaîne de transmission de puissance électromécanique (322) entre le moteur à combustion et un ou plusieurs actionneurs de la machine de travail mobile,
dans lequel la chaîne de transmission de puissance électromécanique comprend un stockage d'énergie capacitive (323) comprenant au moins un module de condensateur selon l'une quelconque des revendications 1 à 6.

8. Machine de travail mobile selon la revendication 7, dans laquelle le module de condensateur est selon la revendication 6 et la machine de travail mobile comprend un système de refroidissement de liquide (324) relié aux canaux de refroidissement du module de condensateur.

9. Machine de travail mobile selon la revendication 8, dans laquelle le système de refroidissement de liquide est configuré pour refroidir un système hydraulique (325) de la machine de travail mobile.
